Europäisches Patentamt

European Patent Office

Office européen des brevets

(11) Veröffentlichungsnummer: **0 195 437 B1**

(12) **EUROPÄISCHE PATENTSCHRIFT**

(45) Veröffentlichungstag der Patentschrift: 27.03.91

(21) Anmeldenummer: 86103726.5

(22) Anmeldetag: 19.03.86

(51) Int. Cl.⁵: **A01G 9/02, A47G 7/08**

(54) **Pflanzenbehälter.**

(30) Priorität: 22.03.85 CH 1268/85

(43) Veröffentlichungstag der Anmeldung:
24.09.86 Patentblatt 86/39

(45) Bekanntmachung des Hinweises auf die
Patenterteilung:
27.03.91 Patentblatt 91/13

(84) Benannte Vertragsstaaten:
**AT BE DE FR GB IT LU NL SE**

(56) Entgegenhaltungen:
DE-B- 1 034 406     DE-U- 8 420 834
FR-A- 1 152 461     FR-A- 1 551 256
FR-A- 2 249 606     GB-A- 1 007 062
GB-A- 1 470 266     US-A- 4 467 561

(73) Patentinhaber: **Ruch, Nino**
**Höheweg 34**
**CH-3006 Bern(CH)**

(72) Erfinder: **Ruch, Nino**
**Höheweg 34**
**CH-3006 Bern(CH)**
Erfinder: **Bigler, Hanspeter**
**Chutzenweg 6**
**CH-3110 Münsingen(CH)**

(74) Vertreter: **Feldmann, Clarence Paul**
**c/o Patentanwaltsbüro FELDMANN AG Post-**
**fach Kanalstrasse 17**
**CH-8152 Glattbrugg(CH)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft einen Behälter zur Aufnahme von Pflanzen mit Wurzeln, der einen Boden und einen Mantel aufweist und oben zur Entfaltung der Pflanzen offen ist. Er kann kleine Abmessungen aufweisen, beispielsweise zur Aufstellung in Wohnräumen oder auf Balkons; er kann aber auch wesentlich größer ausgeführt sein, beispielsweise zur Aufstellung in Eingangshallen öffentlicher oder kommerzieller Gebäude oder in Gärten.

Behälter solcher Art weisen bisher häufig praktische Nachteile auf, so etwa großes Gewicht, Zerbrechlichkeit oder geringe Lebensdauer infolge von Korrosion des Materials, Beschädigung der Umgebung durch Wasserablauf und dergleichen. Vor allem aber befriedigen sie in ästhetischer Hinsicht nicht: Wie auch immer man sie glasiert, bemalt, mit Kunststoff-Folien überzogen oder rund, kantig oder sonstwie geformt hat - es blieb allemal ein "Topf", bei größeren Abmessungen ein "Kübel" und somit gegenüber den zart gegliederten Pflanzen ein markanter, plump und massig wirkender Körper und ein Fremdkörper zugleich, denn in der Natur pflegen Pflanzen nicht in Töpfen oder Kübeln zu wachsen. Der letztere Umstand ist den meisten Betrachtern nicht ohne weiteres bewußt, weil sie von jeher daran gewöhnt sind, Pflanzen aus Töpfen und Kübeln sprießen zu sehen, jedoch erfassen sie es sogleich, wenn man sie auf diese ästhetische Antagonie aufmerksam macht.

Der Erfinder hatte sich nun die Aufgabe gestellt, praktische Nachteile der angedeuteten Art möglichst zu vermeiden und mit einfachen technischen Mitteln, die gleichzeitig technischen, d.h. praktischen Zwecken dienen, zu einer ästhetisch voll befriedigenden Lösung zu gelangen, und er hat die Aufgabe gelöst mit einem Behälter der eingangs erwähnten Art, dessen Kennzeichen darin besteht, daß der Mantel außen mindestens teilweise von wenigstens einem Streifen aus Blech oder Kunststoff umgeben ist, der in einem Abstand vom Mantel befestigt ist und einen konstanten Abstand von der Ebene des Bodens aufweist oder schräg hierzu oder schraubenförmig um den Mantel verläuft. Dabei ist es vorteilhaft, wenn der Streifen ein Muster aus Löchern und/oder ein Prägemuster und/oder ein Farbmuster aufweist.

Würde man den Streifen ohne Abstand vom Mantel des Behälters befestigen oder ihn, was auf dasselbe hinausliefe, darauf nur aufmalen, so würde dies die Aufgabe nicht lösen; es bliebe ein gegenüber der Pflanze massig wirkender Kübel mit mehr oder weniger unpassender Oberflächen-Dekoration, so daß Gegenstand und Mittel und Inhalt der Gestaltung auseinanderklaffen. Erst die Distanzierung des Streifens oder einer Mehrzahl von Streifen vom Mantel des Behälters verwirklicht den Erfindungsgedanken in praktischer Hinsicht wie auch durch Aufgliederung des gesamten Erscheinungsbildes in feingliedrige, "leicht" wirkende Details, hierin der Pflanze vergleichbar und verwandt, jedoch auf seine und den Mitteln eigene Art und ohne Pflanzenformen imitieren zu müssen. Wohl läge es im Rahmen des Erfindungsgedankens, den oder die distanzierten Streifen irgendwie pflanzenförmig zu gestalten, aber da muß vor einem Abgleiten in eine kitschige Gestaltung gewarnt werden, die dann bei unbedachter, allzu vordergründiger Imitation mit andersartigem Mittel naheläge - um so schlimmer im Effekt, als die dann dicht dabei befindliche, wirkliche Pflanze dergleichen unausweichlich bloßstellen würde.

Das Wesen der Erfindung wird besonders deutlich, wenn man sich einmal vorstellt, man würde ein Ölfaß mitten durchschneiden und die eine Hälfte so, wie sie ist, als Behälter für Pflanzen verwenden. Er bliebe ohne weiteres als Ölfaß kenntlich, dessen schäbiger Kontrast zur Pflanze wäre ein ausgesprochen grober Scherz - im ersten Moment vielleicht belustigend wirkend, doch man würde dessen sehr bald überdrüssig. Umgibt man jedoch die Ölfaßhälfte gemäß der Erfindung mit einem oder mehreren Streifen in ästhetisch gut gewählter Anordnung, so ist für den Betrachter das Ölfaß als solches nicht mehr gegenwärtig, er erfaßt befriedigt nur das feingliedrige Gesamterscheinungsbild. Versuche des Erfinders haben dies eindeutig bestätigt.

Die Streifen dienen zugleich und sogar primär rein praktischen Zwecken: Man kann in den Zwischenraum zwischen ihnen und dem Behältermantel Schnittblumen oder z.B. zur Weihnachtszeit Tannenzweige einstecken. Damit diese länger frisch bleiben, braucht man unter den Behälter lediglich einen Untersetzer zu stellen und mit Wasser zu füllen. Der neue Behälter kann aber auch statt dessen selber hierfür vorgesehen sein, indem sein Boden gegenüber dem Mantel vorsteht und nach oben umgebördelt ist, so daß eine Rinne entsteht, in die man Wasser füllen kann. Der Streifen wie auch die Rinne brauchen nicht rings um den Behältermantel zu verlaufen, wenn der Behälter am Aufstellungsort nicht von allen Seiten sichtbar wird; allerdings würde sich hierdurch kaum eine merkliche Herstellungskosten-Ersparnis ergeben.

Es ist überwiegend der vom Behältermantel distanzierte Streifen oder dessen Mehrzahl, der das Aussehen des neuen Behälters bestimmt. Daraus ergibt sich ein weiterer praktischer Zweck des Streifens: Eine mehr oder weniger aufwendige Materialwahl oder Oberflächenbehandlung kann sich daher auf den Streifen beschränken; um so besser, wenn er auch in die ser Hinsicht mit dem sowohl räumlich als auch für die Wahrnehmung zurücktretenden Behältermantel kontrastiert, denn dies unterstreicht die angestrebte Wirkung und dient zusätzlich der Aufgliederung, während dabei Kosten eingespart werden.

Für Form und Anordnung der Streifen besteht eine unbegrenzte Vielfalt von Möglichkeiten, unter denen der Gestalter mit dem Ziel einer optimalen Verwirklichung den Erfindungsgedankens wählen kann. Bevorzugt er hierfür gelochtes Blech als Ausgangsmaterial, weil es schon seinerseits feingliedrig wirkt, so bietet es der Handel in einer riesigen Vielfalt von Lochformen, Lochdichten und u.a. Prägungen des Bleches zwischen den Löchern sowie von Werkstoffen. Für eine Oberflächenveredlung kommen alle bekannten Verfahren wie Lackieren, Galvanisieren, Eloxieren usw. in Betracht, und der Gestalter muß entscheiden, ob dies in Farbe und Oberflächenstruktur gleich, ähnlich oder anders ausfallen soll als beim dahinter befindlichen Behältermantel, bei dem wie auch beim Behälterboden innen eine gute Korrosionsbeständigkeit angestrebt werden muß, zumal wenn er aus gewöhnlichem Stahlblech besteht. Dem Behälter kann ein Innengefäß eingepaßt sein, dessen Höhe etwas kleiner als diejenige des Behältermantels ist; dann konzentrieren sich die Maßnahmen zur Erzielung guter Korrosionsbeständigkeit auf dieses, sei es durch eine gut aufgebaute Beschichtung oder Rostschutzlackierung oder durch die Wahl von rostfreiem Stahl. Es hat sich gezeigt, daß gewisse härtbare Epoxydharze überlegen beständig gegen jederlei chemischen Angriff sind, jedoch ist eine Beschichtung mit den meisten dieser Harz-Härter-Kombinationen wirkungslos, weil mit dem Härtungsvorgang eine Schrumpfung unter gleichzeitigem Sprödewerden einhergeht, so daß sich in einer Beschichtung daraus hierbei Risse bilden. Die Verwendung eines Weichmachers verbietet sich für diesen Zweck, weil die Beschichtung dann nicht mehr diffusionsdicht ist. Unter den vielen Harz-Härter-Kombinationen dieser Art hat sich allerdings die eine perfekt bewährt, die dank eines langen Kettenmoleküls des Härters elastisch bleibt und daher als Beschichtung elastisch und somit rißfrei bleibt, ohne daß ein Weichmacher verwendet werden müßte; es handelt sich hierbei um Bisphenol-A-Epichlorhydrin mit dem tertiären Amin das Palmfettes als Härter.

Zwischen dem Innenbehälter und dem ihn umgebenden Außenbehälter kann sich gelegentlich Kondenswasser bilden, und soll dieses zumal letzteren nicht korrosiv beanspruchen, so kann man ihn mit einem Ablauf im Boden versehen.

Der neue Behälter kann der sogenannten Hydrokultur dienen, wofür er mit Partikeln aus Blähton, die ein geringes Gewicht besitzen, und mit Wasser angefüllt wird. Er kann aber auch mit Erde gefüllt werden, in der die Pflanzen wurzeln; will man ihn hierfür nicht in der althergebrachten Weise mit einem Loch im Boden versehen, so kann er bzw. ggf. sein Innengefäß ein Überlaufrohr zur Begrenzung des Wasserstandes aufweisen. Diese Ausbildung ist erst recht von Vorteil bei Verwendung des neuen Behälters für die Hydrokultur, sogar zusätzlich zu einem Wasserstandsanzeiger, dessen Aufwand dann vergebens bleibt, wenn er nicht beachtet wird, im Gegensatz zum jedenfalls wirksamen Überlaufrohr. Ist ein Innengefäß vorgesehen, so ist der Wasserstandsanzeiger selbstverständlich an dieses anzuschließen. Er sollte ohne weiteres ablesbar sein, das äußere Erscheinungsbild jedoch nicht stören, was durch entsprechende Gestaltung und Anordnung der Streifen erreichbar ist. Es ist jedoch auch an einen elektronischen Wasserstandsanzeiger zu denken, dessen Anzeigeelement nicht ortsgebunden ist.

Bezüglich des Behältermantels ist noch zu erwähnen, daß auch er einer Vielfalt von Gestaltungsmöglichkeiten zugänglich ist, wobei die technischen Gesichtspunkte durchaus Vorrang erhalten dürfen, wie der zuvor erwähnte Versuch mit dem halben Ölfaß gezeigt hat. So kann der Behältermantel zylindrisch oder konisch oder prismenförmig mit einem Vieleck als Grundriß sein, und sein oberer Rand kann in einer zum Boden parallelen oder geneigten Ebene oder in einer gekrümmten Flä che liegen oder schraubenförmig sein. Zur Versteifung kann dem Behältermantel mindestens eine ringsum verlaufende Sicke aufweisen; wird diese zwischen zwei Streifen sichtbar, so trägt nie obendrein zur Auflockerung den Erscheinungsbildes bei. Zweckmäßig ist an ferner, wenn der obere Rand den Behälters mit einem ringsum verlaufenden Wulst aus weichelastischem Material versehen ist, dessen Farbe man auf die übrige Farbgebung abstimmen kann, und der dem Schutz sowohl den Randen als auch handhabender Hände sowie besserem Aussehen dient, verglichen mit einem dünnen Blechrand. Kommt für den neuen Behälter im Gebrauch jemals ein Ortswechsel in Betracht, so ist es zweckmäßig, wenn Rollen unter ihm befestigt sind, wenigstens sofern es sich um einen Behälter mit großen Abmessungen handelt, der dann samt Inhalt ein beträchtliches Gewicht aufweist.

Eine besonders wesentliche und eindrucksvolle Weiterentwicklung des neuen Behälters besteht darin, daß im Zwischenraum zwischen seinem Mantel und dem Streifen und/oder an der Innenseite des Mantels nahe seinem oberen Ende eine Lichtquelle in Form einer Leuchtröhre oder Glühlampenkette vorgesehen ist. Es ist dann vorteilhaft, wenn wenigstens der die Lichtquelle überdeckende Streifen aus einem Lochblech mit relativ großem Flächenanteil der Löcher besteht; er kann dann inwendig mit einer farbigen, transparenten aber lichtstreuenden Folie ausgekleidet sein, so daß neben der Farbwirkung der Vorteil einer Verminderung des Blendeffektes erzielt wird. Die Lichtquelle zwischen dem Behältermantel und dem Streifen läßt den neuen Behälter noch weit mehr aufgelokkert und entmaterialisiert, geradezu geisterhaft erscheinen.

Die Lichtquelle an der Innenseite des Mantels beleuchtet dagegen die Pflanzen von unten und läßt sie dadurch sehr wirkungsvoll betont in Erscheinung treten. Daneben bewirkt die Strahlung der Lichtquelle auf den feuchten Behälterinhalt eine vermehrte Bildung von Wasserdampf aus diesem, der durch die von dieser Lichtquelle vertikal aufsteigende Kon vektion gezielt den Pflanzen zugeführt wird und zugute kommt.

Man kann in dieser Richtung noch einen Schritt weitergehen und dem neuen Behälter einen Zylinder z.B. aus Plexiglas aufsetzen, der die Pflanzen umgibt, und ihn oben durch einen Deckel abschließen, der z.B. im Prinzip ähnlich geformt sein kann wie der neue Behälter; so erhält man eine Art Gewächshaus mit von unten angestrahlten Pflanzen und einem Tropenklima darin, das den meisten Pflanzen besser bekommt als das Klima in Räumen mit Zentralheizung im Winter.

Die Installation der Lichtquelle muß selbstverständlich den einschlägigen Vorschriften genügen, wobei an Feuchtraumbedingungen und an das möglicherweise gelegentlich auftretende Spritzwasser zu denken ist.

Der Befestigung des Streifens am Behältermantel kann beispielsweise je eine Schraubverbindung an mindestens drei Stellen des Umfanges dienen, deren behälterseitiger Teil gegenüber dem Behältermantel abgedichtet oder dort an- oder eingelötet ist. Wird zur Distanzierung eine z.B. rohrförmige Hülse verwendet, so muß ihre Länge jeweils eingepaßt werden, weil die Durchmesser des Behältermantels und des Streifens unvermeidliche Toleranzen besitzen. Will man diese Einpaßarbeit vermeiden, so kann man anstelle der Hülse ein Element aus zwei gegeneinander verschieblichen Teilen verwenden, die sich ohne weiteres der jeweiligen Distanz anpassen lassen und dann mit einem Klebstoff, z.B. Cyanoacrylat, gegenseitig fixiert werden. Eine andere Möglichkeit zur Vermeidung der Einpaßarbeit wird weiter unten im Zusammenhang mit der Zeichnungsbeschreibung dargelegt.

Es ist durchaus möglich, den neuen Behälter in allen Teilen aus Kunststoff herzustellen, bei entsprechenden Stückzahlen sogar in Spritztechnik, und an Kunststoffen mit hierfür vollauf befriedigenden Eigenschaften mangelt es nicht. Bei der Formgebung muß der Fachmann dann die Bedingungen der je weiligen Kunststofftechnologie mit berücksichtigen, die aber mit den von der Erfindung her gegebenen Bedingungen nicht kollidieren, wie eingehende Studien gezeigt haben.

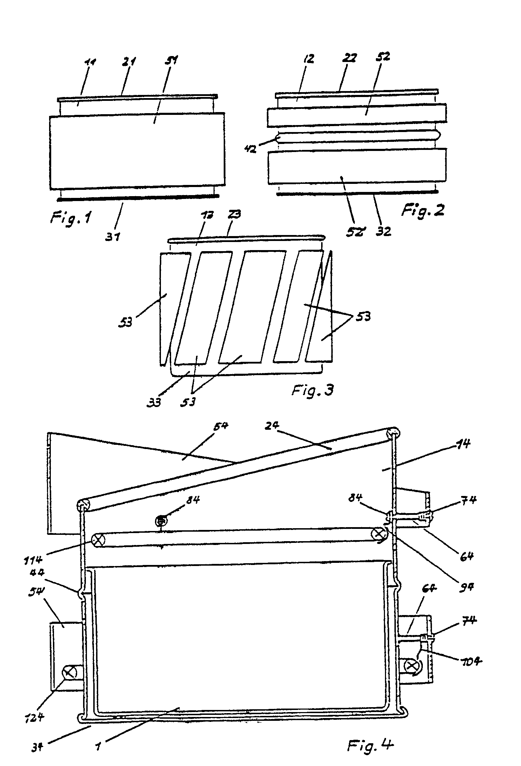

Auf dem beigefügten Zeichnungsblatt sind vier Ausführungsbeispiele des neuen Behälters mit je einer Figur dargestellt, und zwar in Fig.1 bis 3 in der Ansicht, in Fig.4 etwas größer im Schnitt. Die Darstellungen sind in dem Sinne als schematisch zu verstehen, daß der jeweilige Behältermantel nicht nur die Form eines Kreiszylinders, sondern auch eine andere Gestalt haben kann, und daß der ihn in einem Abstand umgebende jeweilige Streifen zwar mit glatter Oberfläche vereinfacht gezeichnet, aber mit einem Muster aus Löchern, einem Prägemuster und/oder einem Farbmuster versehen zu denken ist.

Der in Fig.1 dargestellte Behälter mit einem Behältermantel 11, einem weichelastischen Wulst 21 an seinem oberen Rande und einem Boden 31 ist von nur einem Streifen 51 umgeben, der relativ breit ist und den Behältermantel größtenteils überdeckt. Damit der so resultierende Behälter dennoch aufgelockert wirkt, ist es zweckmäßig, wenn für den Streifen 51 ein Material mit einem markanten Muster aus Löchern gewählt wird.

In Fig.2 besitzt ein Behältermantel 12 zur Versteifung und zur Unterbrechung seiner sonst glatten Gestalt eine Sicke 42, die zwischen zwei hier schmaler gehaltenen Streifen 52, 52' sichtbar wird. Wiederum schließt den Behältermantel 12 ein weichelastischer Wulst 22 oben und ein Boden 32 unten ab.

In Fig.3 sind einen Behältermantel 13 umgebende Streifen 53 schräg aufsteigend angeordnet. Ein weichelastischer Wulst 23 begrenzt den Behältermantel 13 oben, ein Boden 33 begrenzt ihn unten.

Auch in Fig.4 besitzt ein Behältermantel 14 eine ringsum verlaufende, versteifende Sicke 44, die zwischen zwei ihn umgebenden Streifen 54, 54' sichtbar wird, sowie einen ihn oben abschließenden Wulst 24 und einen Boden 34. Bei diesem Ausführungsbeispiel ist ein dem Behältermantel 14 eingepaßtes Innengefäß 1 gezeichnet, und der obere Rand des Behältermantels 14 liegt in einer gegenüber dem Boden 34 geneigten Ebene, der obere Rand des Streifens 54 liegt in einer entgegengesetzt geneigten Ebene. Das Spezielle bei dieser Ausführungsform ist vor allem eine ringförmige Leuchtröhre 114, welche dazu bestimmt ist, Pflanzen von unten her zu beleuchten, und eine ringförmige Leuchtröhre 124 zwischen dem Behältermantel 14 und dem Streifen 54' zur äußeren Beleuchtung des Behälters.

Fig.4 zeigt zudem an einem Beispiel, wie man die Streifen 54, 54' am Behältermantel 14 befestigen kann. Da sind ringsum verteilt rohrförmige Muttern 64 am Behältermantel 14 aufgelötet oder aufgeschweißt, in welche Schrauben 74 eingreifen, die durch den jeweiligen Streifen 54 bzw. 54' hindurchgeführt sind. Die Länge der Muttern 64 ist kleiner als der toleranzbedingte Mindestabstand zwischen Behältermantel und Streifen, und sie wird auf den jeweils benötigten Wert aufgefüllt durch Einfügen von Unterlegscheiben in der nötigen Dicke und Anzahl zwischen die Muttern 64 und den Streifen 54 bzw. 54', wie dort gezeichnet. Man kann dort auch z.B. drahtartige Halter 104 für die äußere Leuchtröhre 124 einfügen, während Halter 94 für die innere Leuchtröhre 114 mit Schrauben 84 befestigt sein können, die von innen her in die dort befindlichen Muttern 64 eingeschraubt sind. Etwas anders gestaltete Halter aus Draht für ringförmige Leuchtröhren sind im übrigen handelsüblich.

## Ansprüche

1. Behälter zur Aufnahme von Pflanzen mit Wurzeln, der einen Boden und einen Mantel aufweist und oben zur Entfaltung der Pflanzen offen ist,
**dadurch gekennzeichnet,**
daß der Mantel [11-14] außen mindestens teilweise von wenigstens einem Streifen [51 - 54] aus Blech oder Kunststoff umgeben ist, der in einem Abstand vom Mantel [11 - 14] befestigt ist und einen konstanten Abstand von der Ebene des Bodens [31 - 34] aufweist oder schräg hierzu oder schraubenförmig um den Mantel [11 - 14] verläuft, und dass der Zwischenraum zwischen Streifen und Mantel so gestaltet und bemessen ist, dass darin Schnittblumen einsteckbar sind.

2. Behälter nach Anspruch 1, dadurch gekennzeichnet, daß der Streifen [51 - 54] ein Muster aus Löchern und/oder ein Prägemuster und/oder ein Farbmuster aufweist.

3. Behälter nach Anspruch 1, dadurch gekennzeichnet, daß in ihn ein Innengefäß [1] eingepaßt ist, dessen Höhe kleiner als diejenige des Behältermantels [11 - 14] ist.

4. Behälter nach Anspruch 1 oder 3, dadurch gekennzeichnet, daß er bzw. das Innengefäß [1] ein Überlaufrohr zur Begrenzung des Wasserstandes aufweist.

5. Behälter nach Anspruch 1 oder 3, dadurch gekennzeichnet, daß er bzw. das Innengefäß [1] mit einem Wasserstandsanzeiger versehen ist.

6. Behälter nach Anspruch 1, dadurch gekennzeichnet, daß sein Mantel [11 - 14] zylindrisch oder konisch oder prismenförmig mit einem Vieleck als Grundriß ist, und daß sein oberer Rand in einer zum Boden [31 - 34] parallelen oder geneigten Ebene oder in einer gekrümmten Fläche liegt oder schraubenförmig ist.

7. Behälter nach Anspruch 1 oder 6, dadurch gekennzeichnet, daß der Mantel [11 - 14] zur Versteifung mindestens eine ringsum verlaufende Sicke [42, 44] aufweist.

8. Behälter nach Anspruch 1, 6 oder 7, dadurch gekennzeichnet, daß sein oberer Rand mit einem ringsum verlaufenden Wulst [21 - 24] aus weichelastischem Material versehen ist.

9. Behälter nach Anspruch 1, dadurch gekennzeichnet, daß er auf Rollen befestigt ist.

10. Behälter nach Anspruch 1, dadurch gekennzeichnet, daß im Zwischenraum zwischen seinem Mantel [11 - 14] und dem Streifen [51 - 54] und/oder an der Innenseite des Mantels [11 - 14] nahe seinem oberen Ende eine Lichtquelle in Form einer Leuchtröhre [114, 124] oder Glühlampenkette vorgesehen ist.

## Claims

1. Container for receiving plants with roots, which has a bottom and a jacket and is open at the top for displaying the plants, characterized in that the jacket (11 to 14) is externally at least partly surrounded by at least one sheet metal or plastic strip (51 to 54), which is fixed at a distance from the jacket (11 to 14), has a constant distance from the plane of the bottom (31 to 34) or slopes with respect thereto, or passes helically around the jacket (11 to 14) and that the gap between the strip and the jacket is designed and dimensioned in such a way that cut flowers can be inserted into the same.

2. Container according to claim 1, characterized in that the strip (51 to 54) has a pattern of holes and/or an embossed pattern and/or a colour pattern.

3. Container according to claim 1, characterized in that an inner receptacle (1) is fitted into the same and whose height is smaller than that of the container jacket (11 to 14).

4. Container according to claims 1 or 3, characterized in that it or the inner receptacle (1) has an overflow tube for limiting the water level.

5. Container according to claims 1 or 3, characterized in that it or the inner receptacle (1) is provided with a water level indicator.

6. Container according to claim 1, characterized in that its jacket (11 to 14) is cylindrical, conical or prismatic with a polygon as the ground plan and that its upper edge is located in a plane parallel or inclined with respect to the bottom (31 to 34), or in a curved surface, or helical.

7. Container according to claims 1 or 6, characterized in that the jacket (11 to 14) has at least one all-round corrugation (42, 44) for reinforcement purposes.

8. Container according to claims 1, 6 or 7, characterized in that its upper edge is provided with an all-round soft elastic material bead (21 to 24).

9. Container according to claim 1, characterized in that it is fixed to rollers.

10. Container according to claim 1, characterized in that in the gap between its jacket (11 to 14) and the strip (51 to 54) and/or on the inside of the jacket (11 to 14) close to its upper end is provided a light source in the form of a fluorescent tube (114, 124) or a string of incandescent lamps.

## Revendications

1. Réceptacle pour plantes à racines, qui présente un fond et une paroi latérale, ouvert dans sa partie supérieure pour y recevoir la plante, caractérisé en ce que la paroi latérale (11-14) est entourée à l'extérieur au moins partiellement par une bande (51-54) en tôle ou en matière plastique, fixée à une certaine distance de la paroi latérale (11-14) et qui s'étend à une distance constante du plan du fond (31-34) ou en oblique par rapport à celui-ci ou de manière hélicoïdale autour de la paroi latérale (11-14), et en ce que l'espace intermédiaire entre la bande et la paroi latérale est conformé et dimensionné de telle sorte qu'on puisse y placer des fleurs coupées.

2. Réceptacle selon la revendication 1, caractérisé en ce que la bande (51-54) présente un motif à trous, découpes et/ou couleurs.

3. Réceptacle selon la revendication 1, caractérisé en ce qu'un récipient interne (1) est encastré dans ce réceptacle, la hauteur de ce récipient étant moindre que celle de la paroi latérale (11-14) du réceptacle.

4. Réceptacle selon la revendication 1 ou 3, caractérisé ce que ce réceptacle ou le récipient interne (1) comporte un tube de trop-plein pour limiter le niveau d'eau.

5. Réceptacle selon l'une et/ou l'autre des revendications 1 et 3, caractérisé en ce que ce réceptacle ou le récipient interne (1) comporte un indicateur de niveau d'eau.

6. Réceptacle selon la revendication 1, caractérisé en ce que la paroi latérale (11-14) a une forme cylindrique ou conique ou encore prismatique avec un polygone comme base, et son bord supérieur se trouve dans un plan parallèle ou incliné vis-à-vis du fond (31-34), dans une surface courbe ou possède une forme hélicoïdale.

7. Réceptacle selon la revendication 1 à 6, caractérisé en ce que la paroi latérale (1-14) présente à titre de renfort au moins une moulure (42, 44) qui s'étend sur la périphérie.

8. Réceptacle selon l'une des revendications 1, 6 ou 7, caractérisé en ce que son bord supérieur est doté d'un cordon (21-24) constitué de matière souple et qui s'étend sur la périphérie.

9. Réceptacle selon la revendication 1, caractérisé en ce qu'il comporte des roulettes.

10. Réceptacle selon la revendication 1, caractérisé en ce que, dans l'espace intermédiaire compris entre sa paroi latérale (11-14) et la bande (51-54) et/ou à l'intérieur de la paroi latérale (11-14), à proximité de son autre extrémité, il est doté d'une source lumineuse sous la forme d'un tube de néon (114-124) ou d'une série de lampes à incandescence.

Fig.1

Fig.2

Fig.3

Fig.4